(19) Europäisches Patentamt

European Patent Office

Office européen des brevets

(11) **EP 1 199 155 B1**

(12) **FASCICULE DE BREVET EUROPEEN**

(45) Date de publication et mention
de la délivrance du brevet:
**23.08.2006 Bulletin 2006/34**

(51) Int Cl.:
*B32B 5/28* (2006.01)    *B32B 7/02* (2006.01)
*A43B 13/12* (2006.01)

(21) Numéro de dépôt: **01123722.9**

(22) Date de dépôt: **04.10.2001**

(54) **Stratifié composite et son utilisation dans la confection d'articles de sport, notamment de chaussures**

Verbundwerkstoff und seine Verwendung zur Herstellung von Sportartikeln, insbesondere Schuhen

Composite laminate and its use in sport articles such as shoes

(84) Etats contractants désignés:
**AT BE CH CY DE DK ES FI FR GB GR IE IT LI LU
MC NL PT SE TR**

(30) Priorité: **17.10.2000 FR 0013287**

(43) Date de publication de la demande:
**24.04.2002 Bulletin 2002/17**

(73) Titulaire: **Salomon S.A.
74370 Metz-Tessy (FR)**

(72) Inventeurs:
• **Renard, Philippe
73150 Moucy (FR)**
• **Roure, Manuel
74960 Meythet (FR)**

(56) Documents cités:
**WO-A-96/26655          GB-A- 2 256 784**

Remarques:
Le dossier contient des informations techniques
présentées postérieurement au dépôt de la demande
et ne figurant pas dans le présent fascicule.

**Description**

Le domaine de invention est celui des matériaux composites, et plus précisément des stratifiés composites à base de fibres organisées ou non en tissus ou en nappes et immobilisées dans des matrices en résine polymère.

Plus précisément, l'invention concerne un stratifié composite se présentant sous forme d'une feuille de faible épaisseur, utilisable dans la fabrication d'articles de sport tels que les chaussures de sport (semelage, empeigne/tige), patins à roulettes, skis, surfs, skate-boards, clubs de golf, trottinettes, cycles (cadres, roues), cannes à pêche, raquettes, casques, bâtons de ski de fond, armature de sacs à dos, de tentes...

Les matériaux composites sont des matériaux comportant une matrice polymère thermodurcissable ou thermoplastique et un renfort fibreux, et éventuellement des charges granulaires et des adjuvants.

La matrice polymère joue le rôle de liant pour les fibres du renfort. Elle répartit et assure la transmission des efforts aux fibres.

Le renfort fibreux orienté (tissé ou non tissé) ou aléatoire (non tissé) procure les propriétés de résistance et de rigidité mécanique au composite final.

Ces composites sont utilisés comme matière première dans l'industrie automobile, les chantiers navals, l'industrie aéronautique, l'industrie textile, l'industrie des articles de sport (chaussures, skis, clubs de golf...).

65 % des composites fabriqués sont des résines polyester ou vinylester renforcées par des fibres de verre, et obtenues selon la technique de moulage ouvert. Les 35 % restants sont formés par des résines spéciales (phénolique, polyuréthanne et silicone) renforcées par des fibres de carbone ou d'aramide.

Les composites peuvent se présenter sous la forme de constructions sandwich ou stratifiées, formées par une pluralité de couches fibreuses superposées et noyées dans la matrice. Dans ces stratifiés composites (sandwich), on distingue une structure centrale dénommée également âme ou noyau composite, liée par chacune de ses faces à une peau composite extérieure. Ces constructions composites sandwich ou stratifiées, ont pour caractéristique d'être relativement légères et extrêmement rigides. Cette raideur est telle que la *déformabilité* est très réduite. On comprend alors aisément que de telles caractéristiques mécaniques rendent difficiles le façonnage et la mise en forme de pièces réalisées dans des stratifiés composites.

Le brevet américain **3 873 168** décrit un article en stratifié composite comportant une âme 14 constituée par une résine réticulable en polyimide et renforcée par un tissu de verre. Cette âme est intercalée entre deux peaux composites dont la matrice est également en résine polymide réticulable et dont le renfort fibreux est formé par un tissu de graphite. Le stratifié composite selon l'US 3 873 168 souffre d'une trop grande rigidité et d'un coût relativement élevé. En effet, les fibres employées sont des fibres ou des tissus de fibres haute performance donc onéreux.

Le brevet américain **3 779 851** divulgue un stratifié composite constitué d'une pluralité de feuilles de tissu de graphite imprégnées de résine époxy. Ce stratifié est présenté comme possédant un ratio *résistance mécanique/poids* très haut, ainsi que des caractéristiques d'expansion thermique très faibles. De telles spécifications sont recherchées pour des applications de ces stratifiés composites pour la fabrication d'instruments d'optique (miroir). Il s'agit là encore de stratifiés composites extrêmement rigides. L'épaisseur totale des stratifiés composites selon l'US 3 779 851, est par exemple de 3,6 mm, voire au minimum de 3 mm (12 pouces x 0,254).

Les plis mis en oeuvre pour fabriquer ce stratifié sont des feuilles préimprégnées de fibres de carbone dans une matrice de résine époxy. Ce stratifié composite présente une raideur trop importante pour être utilisé comme matière première dans la manufacture d'articles de sport, par exemple de chaussures, où l'on a besoin d'une certaine déformabilité ou aptitude à la flexion dans le sens longitudinal. En outre, le renfort fibreux est exclusivement constitué de fibres de carbone. Cela entraîne un prix prohibitif pour des domaines d'application tels que celui des articles de sport qui sont produits à grande échelle et à très faible coût de revient, contrairement à ce que l'on peut trouver dans des domaines technologiques de pointe, telles que aéronautique ou l'aérospatiale.

Par ailleurs, Il est connu d'utiliser dans des articles de sport, en particulier des organes de glisse, tels que des skis, des patins à glace, des patins à roulettes, des snow-boards, des moyens d'amortissement constitués par des structures stratifiées comprenant des composites.

Ainsi, la demande de brevet français **n° 2 742 063** divulgue un châssis de patins à roulettes comportant un moyen d'amortissement, constitué par un stratifié comportant successivement une couche de contrainte rigide et une couche visco-élastique. Le stratifié peut comprendre une ou plusieurs paires de *couche rigide/couche visco-élastique.* La couche rigide est réalisée à partir de matière plastique à haut module d'élasticité, à partir de fibres composites ou à partir d'aluminium, ces matériaux étant choisis pour leur rigidité et leur légèreté. La couche visco-élastique est en caoutchouc ou en élastomère synthétique. Pour avoir l'effet amortisseur recherché, le stratifié composite-caoutchouc selon le FR 2 742 063 possède nécessairement une épaisseur supérieure ou égale à 3 mm. En outre, ce moyen d'amortissement stratifié composite reste perfectible en termes de déformabilité, de coût et de gain de poids.

La demande de brevet français **n° 2 730 416** décrit un manche de club de golf constitué par un stratifié comprenant une couche externe composite en résine renforcée:

- par des fibres de carbone, une âme (ou noyau) centrale en mousse polymère, en résine synthétique ou naturelle, en liège, en bois ou autres,
- et par une couche interne composite de résine renforcée par des fibres de verre.

La masse volumique des couches interne et externe composites est supérieure à 1,2 kg/dm$^3$ et leur module de Young longitudinal E1 est supérieur à 20 GPa. L'âme en mousse polymère a une masse volumique inférieure à 1,2 kg/dm$^3$ et un module de Young longitudinal E3 inférieur à 20 GPa. Ce stratifié composite a une épaisseur comprise entre 0,2 et 9 mm. Là encore, il a pu être constaté que le compromis *raideur/déformabilité/durée de vie/gain de poids* n'est pas totalement satisfaisant pour ce stratifié composite/mousse polymère/composite selon cette demande de brevet français n° 2 730 416. Le document GB-A-2-256-784 décrit une semelle de chaussure en caoutchouc munie d'un renfort composite ne présentant pas une structure sandwich. Le document WO96/2665, décrit une semelle en polyuréthane muni, dans son épaisseur, d'une ou plusieurs couches de fibres polyaramides.

Il ressort de cette revue d'état de la technique que les fabricants d'articles de sport sont toujours dans l'attente d'une matière première ayant les propriétés mécaniques des composites en termes de raideur maximale et de déformabilité minimale, alliées à une capacité d'amortissement des vibrations, à un faible coût, et à un faible poids. Ces fabricants attendent également de cette matière première qu'elle soit facilement faisable et façonnable industriellement et enfin qu'elle conserve ses propriétés mécaniques de manière durable dans le temps.

Dans ces circonstances, l'un des objectifs essentiels de la présente invention est de proposer un nouveau matériau de base pour la confection d'articles manufacturés, en particulier d'articles de sport, ayant des exigences mécaniques drastiques, un coût de revient très faible et une légèreté aussi grande que possible.

Ces objectifs, parmi d'autres, sont atteints par la présente invention qui concerne tout d'abord un stratifié composite comprenant une structure sandwich faite d'une âme intercalée entre deux peaux, caractérisé en ce que :

- l'âme et les deux peaux sont composites,
- au moins une partie des fibres de l'âme sont des fibres dont la résistance mécanique est significativement inférieure à celle d'au moins une partie des fibres de l'une et/ou l'autre peau.

Il est du mérite des inventeurs d'avoir pu mettre en évidence, après de longs et laborieux travaux et de manière tout à fait surprenante et inattendue, que le fait de réaliser une structure microsandwich entièrement composite dans laquelle l'âme comprend une résine renforcée par des fibres dont les propriétés mécaniques sont moindres que celles de fibres de renfort des peaux composites disposées de part et d'autre de l'âme.

En effet, contre toute attente, cette introduction de fibres n'ayant pas de résistance mécanique et ayant une faible valeur économique, n'a pas nui aux qualités mécaniques du matériau composite stratifié.

Grâce à l'invention, on dispose ainsi d'un matériau composite stratifié, léger, économique et doté de hautes qualités mécaniques.

L'invention concerne également l'un des procédés de fabrication du stratifié sus-visé, l'utilisation dudit stratifié pour la fabrication d'articles de sport - notamment de chaussures -, et l'article ainsi constitué.

L'invention sera mieux comprise à la lumière de la description détaillée qui suit d'exemples préférés de réalisation du stratifié selon l'invention, en référence aux dessins annexés dans lesquels :

- la figure 1 est une représentation schématique partielle en coupe du stratifié selon l'invention,
- les figures 2A et 2B sont des schémas explicatifs d'un test Tf d'évaluation de la résistance mécanique de stratifié composite,
- les figures 3A et 3B sont des vues respectivement de dessus et en coupe longitudinale d'un élément de partie inférieure de chaussure (semelage) - en l'occurrence première de montage - constitué par le microsandwich composite selon l'invention,
- les figures 4 à 6 sont des graphes donnant l'évolution de la résistance mécanique par rapport à un étalon (100 %) composite en fibres de carbone en fonction du rapport de l'épaisseur de l'âme sur la moyenne des épaisseurs des peaux (ou valeur moyenne d'épaisseur de peau),
- la figure 7 représente une courbe d'amortissement d'un stratifié selon l'invention par rapport à un stratifié étalon en composite fibres de carbone, en fonction du temps en secondes,
- la figure 8 est un histogramme donnant la densité surfacique de deux stratifiés composites selon l'invention par rapport à un composite monobloc en fibres de carbone.

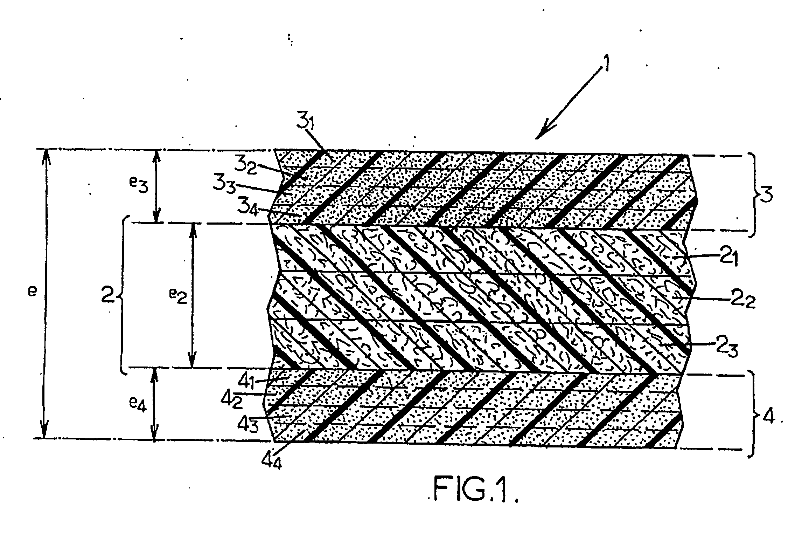

La figure 1 représente le stratifié composite 1 selon l'invention. Celui-ci est constitué d'une structure sandwich comprenant une âme ou noyau 2 intercalée ou prise en sandwich entre deux peaux 3 et 4. Cette âme 2 et ces peaux 3 et 4 sont de nature composite, c'est-à-dire formées par une matrice en résine polymère - de préférence la même pour les trois - renforcées par des fibres (matériau fibreux). Le matériau fibreux des peaux 3 et 4 est constitué par des fibres à hautes performances, tandis que le matériau fibreux de l'âme 2 comporte des fibres à faibles caractéristiques mécaniques et de préférence peu coûteuses.

Avantageusement, le matériau fibreux de l'âme et/ou des peaux se présente :

- sous forme d'ensembles linéaires continus de (micro)fibres réunies en fils ou en mèches de différentes formes (fils de base, fils simples, fils câblés, mèches, rowing);
- sous forme de fils non linéaires (discontinus), fils de base coupés ou fibres broyées;
- sous forme de mats : mat à fils coupés ou à fils continus, mat de surface, mat aiguilleté;
- ou sous forme de tissus à armature toile ou taffetas, à armature satin, à armature sergé, à armature haut module, à armature unidirectionnelle, ou à armature ruban.

Suivant une disposition préférée de l'invention, l'âme 2 et les peaux 3 et 4 sont constituées chacune par une pluralité de plis - en l'occurrence 3 pour l'âme 2 ($2_1$, $2_2$, $2_3$) et 4 pour les peaux 3 et 4 (respectivement $3_1$, $3_2$, $3_3$, $3_4$ ; $4_1$, $4_2$, $4_3$, $4_4$)-.

En pratique, l'âme 2 et/ou la ou les peaux 3 et 4 sont obtenues par superposition de plusieurs plis de matériaux fibreux et/ou composite.

Ainsi, le stratifié 1 composite selon l'invention est caractérisé en ce qu'il possède un ou plusieurs plis constitutifs de l'âme et un ou plusieurs plis constitutifs des peaux, ces plis étant formés par des nappes de microfibres tissées ou non, orientées ou non, préimprégnées ou non de résine.

Sur une caractéristique préférée de invention, le stratifié a une épaisseur "e" totale inférieure ou égale à 3 mm, de préférence inférieure à 2,5 mm.

L'épaisseur $e_2$ de l'âme 2 est quant à elle avantageusement inférieure ou égale à 2 mm, de préférence à 1,5 mm.

Par ailleurs, il est préférable que le rapport de l'épaisseur de l'âme $e_2$, sur l'épaisseur totale des deux peaux $e_3 + e_4$ soit défini comme suit :

$$e_2 / \frac{e3+e4}{2} \leq 5$$

de préférence

$$e_2 / \frac{e3+e4}{2} \leq 4$$

et plus préférentiellement encore

$$0,1 \leq e_2 / \frac{e3+e4}{2} \leq 3,5.$$

Concernant la nature et la structure du matériau fibreux de l'âme 2, il est à noter que les fibres de renfort de cette âme 2 sont tissées ou non, sont orientées ou non dans une ou plusieurs directions, et sont préférablement choisies dans le groupe comprenant :

- les (micro)fibres textiles en :

  - polymères synthétiques : polyamides (NYLON), polyoléfine, polyesters, polyesterimides...
  - polymères naturels : soie, coton, lin, jute, chanvre,

- les fibres cellulosiques.

On peut éventuellement envisager de mettre en oeuvre des mélanges de ces fibres.

A titre d'exemples de renfort fibreux pour l'âme 2, on peut citer tous les tissus naturels ou synthétiques, en particulier la soie, les polyamides (NYLON®) comme par exemple un textile utilisé comme doublure dans les vêtements et constitué d'un matériau non tissé fait de microfibres de nylon (Cambrelle®), ou d'autres textiles comme le lin, le coton, la jute, la toile à patron, le BEMBERG®, tout type de papier : papier aquarelle, papier buvard, papier kraft, papier absorbant, papier hygiénique, papier journal..., tout type de carton....

En fait, peuvent convenir tous les matériaux fibreux susceptibles de se présenter sous forme de nappes fines et *imprégnables* par de la résine polymère, et propre à former le renfort fibreux de l'âme 2 du stratifié selon l'invention, pour autant que sa valeur marchande soit faible.

S'agissant du renfort fibreux des peaux, il est préférable conformément à l'invention que les fibres qui le constituent, qu'elles soient tissées ou non, orientées ou non dans une ou plusieurs directions, soient sélectionnées dans le groupe de (micro)fibres haute performance comprenant :

- les (micro)fibres de carbone ;
- les (micro)fibres de verre ;
- les (micro)fibres de polymères synthétiques, en particulier les polyoléfines, plus spécialement les fibres de polyéthylène haute densité orientées DYNEEMA® et étirées, les fibres de polyamides KEVLAR® TEVARON® ou autres fibres telles que VECTRAN® ou SPECTRAL®;
- les (micro)fibres métalliques, en particulier, les (micro)fibres d'aluminium, de titane ou de bore ;
- les (micro)fibres naturelles telles que la soie.

On peut éventuellement envisager de mettre en oeuvre des mélanges de ces fibres.

De préférence, les fibres des peaux sont des fibres de verre, (par exemple de verre E, de verre R ou S, de verre D, de silice), les fibres de carbone, les fibres de polyéthylène haute densité, orientées et étirées (DYNEEMA®), fibres d'aluminium ou polyamide (KEVLAR®).

Comme indiqué ci-dessus, une des caractéristiques essentielles de l'invention repose sur le choix d'un renfort fibreux pour l'âme 2 du microsandwich, de moindre qualité ou résistance mécanique par rapport au renfort fibreux des peaux externes 3 et 4.

Au sens de invention, cette notion de moindre qualité ou résistance mécanique peut être appréhendée au travers d'au moins une des caractéristiques mécaniques suivantes propres aux fibres constitutives du renfort fibreux de l'âme 2 et des peaux :

□ les microfibres de l'âme 2 tissées ou non, orientées ou non dans une ou plusieurs directions ont une caractéristique de contrainte à la rupture en traction longitudinale CR (en MPa) telle que : $CR \leq 1500$
de préférence
$CR \leq 1\,000$
et plus préférentiellement encore
$CR \leq 750$

Un autre critère de sélection des fibres de l'âme 2 est lié à leur prix. Ainsi les fibres de l'âme 2 sont de préférence choisies parmi les fibres ayant une valeur marchande moyenne au moins 2 fois, de préférence au moins 5 fois et plus préférentiellement encore au moins 10 fois inférieure à celle des fibres de la ou des peaux.

Les renforts fibreux de l'âme 2 et/ou des peaux 3 et 4 peuvent se présenter sous forme de fils continus ou de semi-produits plus ou moins sophistiqués, tels que les fibres sèches, les tissus secs, les tissus préimprégnés, les produits pultrudés.

Selon une caractéristique avantageuse de l'invention, l'âme 2 du stratifié composite présente des propriétés de dissipation des vibrations (amortissement).

Pour des raisons évidentes de facilité de fabrication, on privilégiera les formes de réalisation dans lesquelles la matrice de l'âme 2 et des peaux 3 et 4, est constituée par un seul et même produit.

Ainsi, ces matrices/liants sont par exemples choisies parmi les résines thermodurcissables ou thermoplastiques organiques :

o phénoliques
o polyester,
o vinylester
o polyesterimide
o polyaramide
o époxyde,
o polyimide
o polycarbonate
o polytéréphtalate
o polyoxyde de phénylène
o polyacétal
o polyamide

o polysulfuré

o polyoléfine

A titre d'exemples pratiques, on peut citer les résines époxy, les résines phénoliques, les résines vinylester et les résines polyester.

Selon les applications et donc les propriétés mécaniques recherchées, il est possible d'introduire des charges ou des additifs dans les composites de l'âme 2 ou des peaux 3 et 4 du stratifié 1 selon l'invention. Ces charges/additifs sont par exemple sélectionnées dans le groupe comprenant : les catalyseurs, les accélérateurs, les agents de démoulage, les ignifugeants, les anti UV, les fongicides, la craie, la silice, le kaolin, l'oxyde de titane, le verre, les fibres courtes, les poudres métalliques, le quartz, le mica.

Suivant une autre variante Intéressante de réalisation de l'invention, au moins l'une des peaux du stratifié 1 est transparente de manière à rendre visible l'âme 2, cette dernière comportant avantageusement des éléments de décoration. Cette variante pourrait être mise en oeuvre pour des applications de type skis, snow-boards, planches à roulettes, patins à roulettes, surfs, entre autres.

Le stratifié ou microsandwich 1 selon l'invention peut également être défini au travers d'une caractéristique de rigidité R mesurée dans un test de flexion Tf.

La procédure de test Tf est la suivante:

On met en oeuvre des éprouvettes rectangulaires de dimensions 90 x 50 mm. Les dimensions de l'essai sont fixes quelle que soit l'éprouvette testée.

Sur la figure on a représenté la largeur l égale à 50 mm de l'éprouvette 5.

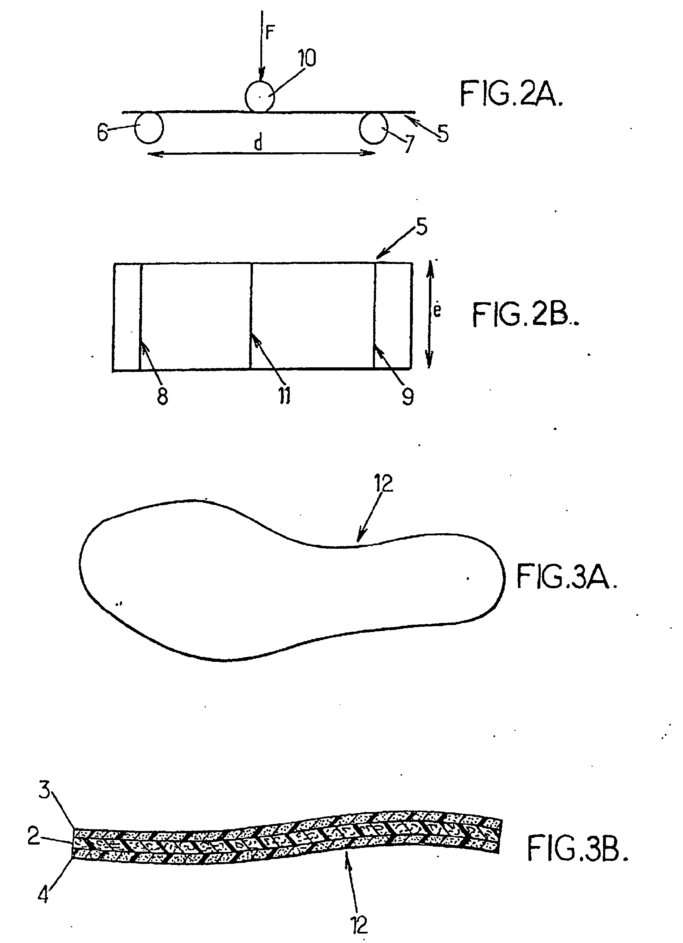

Ces éprouvettes sont testées en flexion trois points sur une machine de traction conventionnelle. Le dispositif utilisé est représenté en vue de côté sur la figure 2A et en vue de dessus sur la figure 2B.

L'éprouvette rectangulaire de 90 x 50 mm est désignée par la référence 5. Cette éprouvette 5 repose sur deux barreaux cylindriques 6-7, parallèles, transversaux, de diamètre égal à 10 mm et de longueur sensiblement égale à la largeur de l'éprouvette soit 50 mm. Ces barreaux métalliques cylindriques 6,7 définissent des lignes d'appui 8, 9 respectivement, montrées sur la figure 2B.

On applique une force F par l'intermédiaire d'un troisième barreau métallique cylindrique 10 identique et parallèle aux barreaux 6,7 et reposant sur la face supérieure de l'éprouvette 5, de manière à définir une ligne d'appui 11. Cette dernière est disposée sensiblement au milieu de la distance d séparant les lignes d'appui 8, 9 des cylindres 6, 7 d'appui. La distance d entre les lignes d'appui 8 et 9 est de 80 mm. Ce test Tf permet de terminer le module de Young de l'éprouvette, qui peut être en stratifié microsandwich composite 1 selon l'invention. On peut également évaluer ainsi sa résistance à la rupture, ainsi que sa flèche en rupture.

A partir de ces résultats, la rigidité R de l'éprouvette est donnée dans une unité non conventionnelle, à savoir : N/mm. Cela correspond à l'effort nécessaire pour obtenir un millimètre de flèche mesuré au début de la flexion.

Les résultats sont exprimés par rapport à une éprouvette témoin/étalon, qui est réalisée en fibres de carbone de nature T 700 et de provenance TORAY. Les fibres de carbone utilisées se présentent sous la forme d'un tissu préimprégné ayant les caractéristiques suivantes : 193 g/m$^2$ et commercialisées sous la dénomination VICOTEX® de chez HEXCEL Composites. La résine de la matrice est une résine époxy M10 DE HEXCEL Composites.

Ainsi, suivant une caractéristique préférée de l'invention, le stratifié selon l'invention possède une caractéristique de résistance à la rupture R dans un test de flexion Tf par rapport à une éprouvette témoin en composite fibres de carbone de même forme et rigidité que celles des éprouvettes testées, telle que :R≥50,

de préférence

R ≥ 60,

et plus préférentiellement encore

R ≥ 70.

S'agissant de la fabrication des stratifiés composites 1 selon invention, il est possible d'avoir recours à tous les procédés connus de l'homme de l'art spécialiste des composites. A titre d'exemples, on peut citer :

- les procédés manuels par contact ou par projection,
- les procédés moyenne série par moulage sous vide ou par injection (RTM),
- les procédés par moulage à la presse, par basse pression et à froid, par moyenne pression et à chaud, ou par haute pression et à chaud (SMC-TER),
- les procédés par stratification en continu par pultrusion, par auto-moulage ou par injection des thermoplastiques,
- les procédés de moulage par injection réaction (RIM) appliqués en particulier au polyuréthane (RIM pur, R-RIM, S-RIM).

Dans les cas où l'assemblage des différentes couches du stratifié composite n'est pas obtenu par des procédés mentionnés ci-dessus, on peut en lieu et place ou en complément mettre en oeuvre des assemblages par collage à l'aide d'adhésifs appropriés.

Sans que cela ne soit limitatif, on évoquera dans le présent exposé, deux modes de mise en oeuvre d'un procédé de fabrication du stratifié composite selon l'invention.

Dans le premier mode de mise en oeuvre, on utilise des renforts fibreux (mats, nappes de fils orientés dans une ou plusieurs directions, tissus) secs. Le renfort fibreux de l'âme 2 est ainsi constitué par une ou plusieurs feuilles superposées (par exemple de papier) ou de tissus (e.g. soie) ou de non-tissés par exemple CAMBRELLE® = microfibres nylon.

Chaque peau 3 et 4 un renfort fibreux est constituée de un ou plusieurs plis de matériau fibreux (fibres de carbone orientées ou non, tissées ou non).

On imprègne de résine réticulable tout ou partie des plis de peaux 3-4 et éventellement de l'âme 2, à l'aide d'une résine réticulable (par exemple époxy).

On soumet l'empilage de plis imprégnés de résine à une forte pression (par exemple 8 bars).

Avantageusement, on chauffe pour accélérer la réticulatlon (par exemple à 150°C). De manière préférée, l'âme sèche est disposée entre les peaux et l'on imprègne ensuite les deux peaux avec la résine.

Selon le deuxième mode de mise en oeuvre du procédé, le ou les plis constitutifs de la ou des peaux 3-4 et/ou de l'âme 2, sont constitués par un matériau fibreux préimprégné de résine.

On procède ensuite à l'empilage permettant d'obtenir le microsandwich, on met sous pression et éventuellement on chauffe comme prévu dans le premier mode de mise en oeuvre.

Pour les peaux, le tissu préimprégné utilisé peut être un tissu multidirectionnel ou unidirectionnel de fils de carbone sur lesquels est déposée la résine. L'excès de résiné est éliminé par passage entre des rouleaux chauffés ou non (calendrage). Avant utilisation, le produit doit être conservé à froid, généralement à moins 18°C pour éviter la polymérisation de la résine. Les tissus doivent être ramenés à la température ambiante pour être utilisables.

Quand le renfort fibreux des peaux 3-4 n'est pas en fibres de carbone mais en fibres de polyéthylène haute densité, la pression utilisée de 2 bars et la température de 100°C. De toutes façons, l'homme du métier est à même de régler ces paramètres selon la nature des matériaux utilisés.

Selon un autre de ses aspects, l'invention concerne l'utilisation du stratifié tel que défini ci-dessus pour la fabrication des articles de sport et notamment :

- chaussures en particulier semelage ou tige, et plus spécialement de chaussures de sport,
- articles de sport, notamment patins à roulettes, skis, surfs, skate-boards, manche ou "shaft" et tête de clubs de golf, trottinettes, cycles, cannes à pêche, raquettes, casques, bâtons de ski (fond), armatures de sac à dos, de tentes ...

En outre, l'invention a également pour objet les articles, et notamment les articles de sport tels qu'obtenus par l'utilisation du stratifié composite microsandwich évoqué ci-dessus.

Enfin, le stratifié selon l'invention peut être employé pour réaliser une peau de stratifié composite en particulier du type de ceux ayant une épaisseur supérieure à 3 mm.

**Exemple 1 :**

A titre d'illustration, on décrit ci-après la préparation d'un élément constitutif de la partie inférieure (semelage) d'une chaussure par exemple de sport : semelle interne, première de propreté, première de montage... Les figures 3A et 3B font apparaître cet élément de semelage 12 constitué par un stratifié composite selon l'invention. Ce dernier comprend les deux peaux extérieures 3, 4 et une âme interne 2.

Les renforts fibreux utilisés sont :

- pour les peaux 3-4 : des feuilles de tissu de carbone préimprégnées et ayant une densité surfacique de 193 g/m$^2$, d'épaisseur égale à 0,19 mm et commercialisées sous la dénomination VICOTEX® / HEXCEL. L'orientation des fibres dans le tissu de carbone est la suivante 0°/90°
- pour l'âme 2 : un non-tissé de microfibres de polyamide (NYLON®), d'épaisseur égale à 0,32 mm et commercialisé sous la dénomination CAMBRELLE® PBS 3.

A l'aide d'un outil emporte-pièce ayant la forme de l'élément 12 de la figure 3A, on découpe six plis de tissu de carbone préimprégnés et quatre plis de Cambrelle. On empile trois plis de tissu de carbone préimprégnés pour former la peau externe 4, puis quatre plis de Cambrelle pour former âme 2, et enfin trois plis de tissu de carbone préimprégnés pour former l'autre peau externe 3.

On place ensuite cet empilage ou cette superposition de plis dans la partie femelle d'un moule de forme appropriée, on applique ensuite la partie mâle de ce moule sur l'empilage ou la superposition de plis, à l'aide d'une presse à plateau de type de celles commercialisées par la Société SATIM, en chauffant à 150°C pendant 10 minutes et sous une pression de 4 bars.

On extrait l'élément de semelle 12 en stratifié composite du moule, on le laisse refroidir 10 minutes, et on procède ensuite aux opérations de finition comme l'ébavurage.

L'élément de semelle 12 ainsi fabriqué est léger, économique et présente les qualités mécaniques attendues en termes de flexion longitudinale et de raideur transversales.

**Exemple 2 : fabrication d'éprouvettes rectangulaires de stratifié composite et d'une éprouvette témoin / évaluation de ces éprouvettes dans le test de rigidité Tf et dans un test d'amortissement puis mesure de la légèreté du stratifié**

2.1) Fabrication des éprouvettes

Les éprouvettes fabriquées sont des parallélépipèdes rectangles de dimensions 80 x 50 mm. Elles sont obtenues de la même façon que les éléments de semelle 12 dont la fabrication est décrite ci-dessus. Ces éprouvettes ont la même constitution et la même épaisseur que cet élément de semelle 12 fabriqué comme décrit ci-dessus. La seule différence entre les éprouvettes tient à la nature du renfort fibreux de l'âme 2 que l'on fait varier.

L'éprouvette étalon/témoin en fibres de carbone a les mêmes dimensions et la même forme que les éprouvettes de stratifié composite testé. Sa fabrication est décrite ci-dessus, en liaison avec la procédure du test Tf.

2.2) Rigidité R

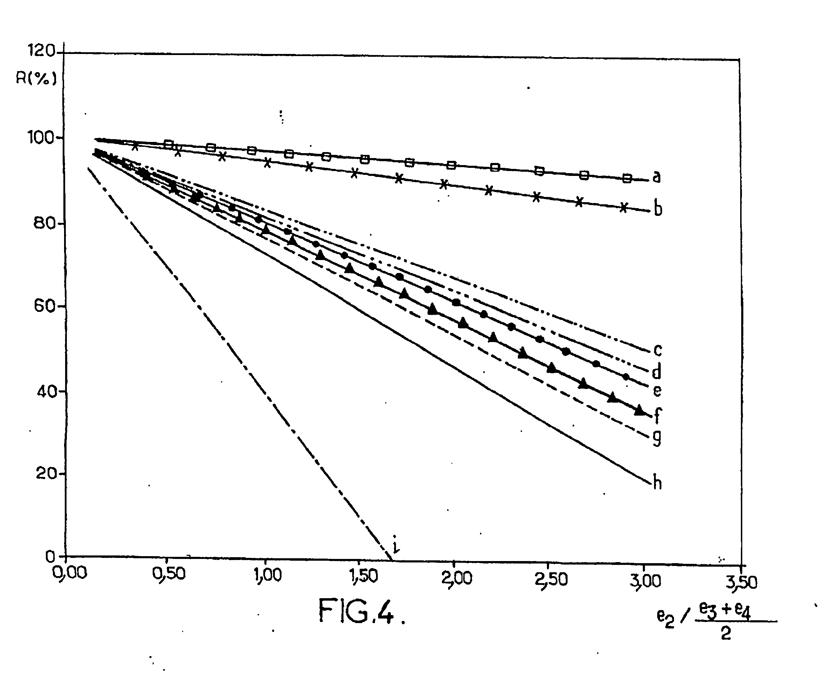

On a mesuré la rigidité R de neuf stratifiés composites selon l'invention par rapport à un témoin ou étalon de référence constitué par une éprouvette monobloc en fibres de carbone telle que définie ci-dessus, en fonction de l'épaisseur de l'âme par rapport à l'épaisseur des peaux. On obtient ainsi 9 courbes, a à i, montrées sur la figure 4. Le tableau 1 ci-dessous donne la nature des éprouvettes de stratifié composite testé.

TABLEAU 1

| Courbe | Nature du renfort fibreux de l'âme 2 | Origine / Nom commercial |
|---|---|---|
| a | Soie | Tissu de confection |
| b | Non tissé de microfibres de polyamide | CAMBRELLE PBS3 |
| c | Lin | Tissu de confection |
| d | Tissé de microfibres de polyamide | BONTEX BONSTITCH NXT 0,9 |
| e | Non-tissé de microfibres de polyamide | CAMBRELLE PBS4 |
| f | Jute | Tissu de confection |
| g | Toile à patron | Tissu de confection |
| h | Coton | Tissu de confection |
| l | Soie synthétique | BEMBERG |

La figure 4 montre que pour des ratios $\dfrac{e_2}{\frac{e3+e4}{2}}$ de l'ordre de 0,5, les propriétés des stratifiés composites 1 de l'invention sont comparables à celles de l'étalon en fibres de carbone.

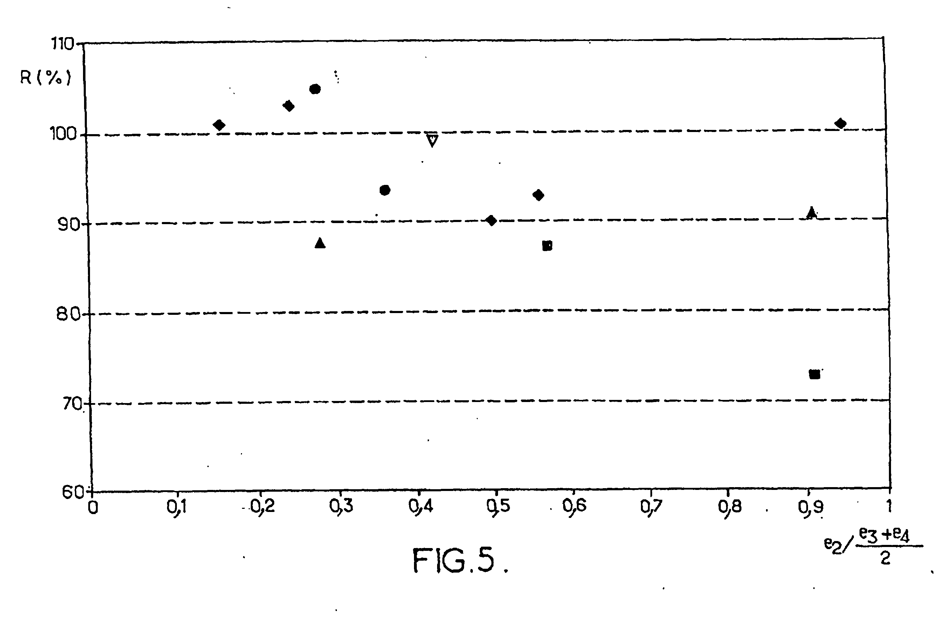

La figure 5 annexée montre les résultats obtenus pour des renforts fibreux de l'âme du stratifié composite selon l'invention, en soie de différentes natures. Le tableau 2 ci-dessous précise la nature et l'origine des soies mises en oeuvre.

TABLEAU 2

| Courbe | Nature du renfort fibreux de l'âme 2 | Origine / Nom commercial |
|---|---|---|
| ♦ | Soie | CONFECTION |
| ■ | Soie sauvage | TUSSAH 6342 |

(suite)

| Courbe | Nature du renfort fibreux de l'âme 2 | Origine / Nom commercial |
|--------|--------------------------------------|--------------------------|
| ▲ | Soie | SHAPPE 11122 |
| • | Soie | TWILL ADC 79095 |
| ∇ | Velours soie 200 g | CONFECTION |

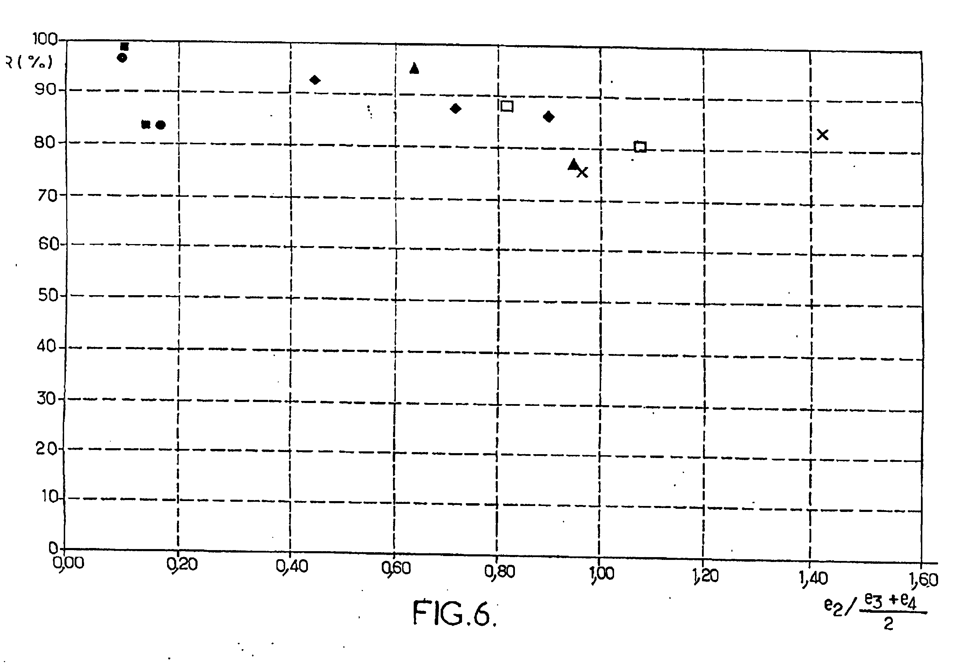

La figure 6 donne également des résultats de rigidité relative de composés stratifiés dont l'âme A présente un renfort fibreux en papier par rapport à un étalon témoin en fibres de carbone.

Le tableau 3 des papiers mis en oeuvre pour l'âme du stratifié composite selon l'invention.

TABLEAU 3

| Courbe | Nature du renfort fibreux de l'âme 2 |
|--------|--------------------------------------|
| ♦ | Papier absorbant essuie-mains |
| ■ | Papier journal |
| ▲ | Papier dessins |
| X | Papier buvard |
| □ | Papier aquarelle |
| ● | Kraft |

2.3) Propriétés amortissantes

On évalue les propriétés amortissantes des éprouvettes de stratifiés composites selon l'invention, dans lesquelles le renfort fibreux de l'âme est en soie. Ces éprouvettes sont parallélépipédiques, de dimensions 70 x 8 cm pour une épaisseur inférieure à 3 mm. L'éprouvette est fixée à un support par l'une de ses extrémités. On fait fléchir l'extrémité libre d'une valeur égale à 65 mm par rapport à la position de repos de l'éprouvette puis on laisse l'éprouvette osciller en mesurant le parcours de l'extrémité libre.

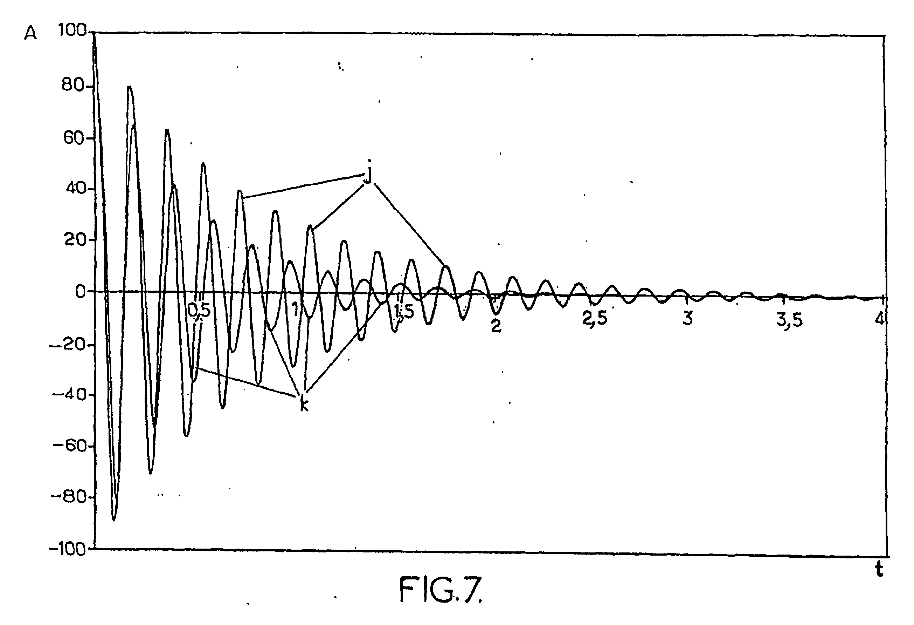

La figure 7 annexée montre la courbe $\underline{k}$ de l'amortissement A en fonction du temps t.

Cette courbe $\underline{k}$ est à comparer avec l'amortissement A en fonction du temps (courbe j) obtenue pour une éprouvette étalon de même dimensions et de même forme que l'éprouvette du composite stratifié à tester, à la différence que l'étalon est constitué par un composite de fibres de carbone du même type que celles utilisées pour le témoin des tests de rigidité R pour le test Tf décrit ci-dessus. La résine du composite est identique pour le stratifié composite testé et pour l'éprouvette témoin en fibres de carbone. La comparaison des courbes k,i montre que le stratifié composite avec renfort fibreux en soie pour l'âme, présente de bien meilleures propriétés d'amortissement A que l'étalon témoin dont le renfort fibreux est en fibres de carbone hautes performances.

2.4) Légèreté

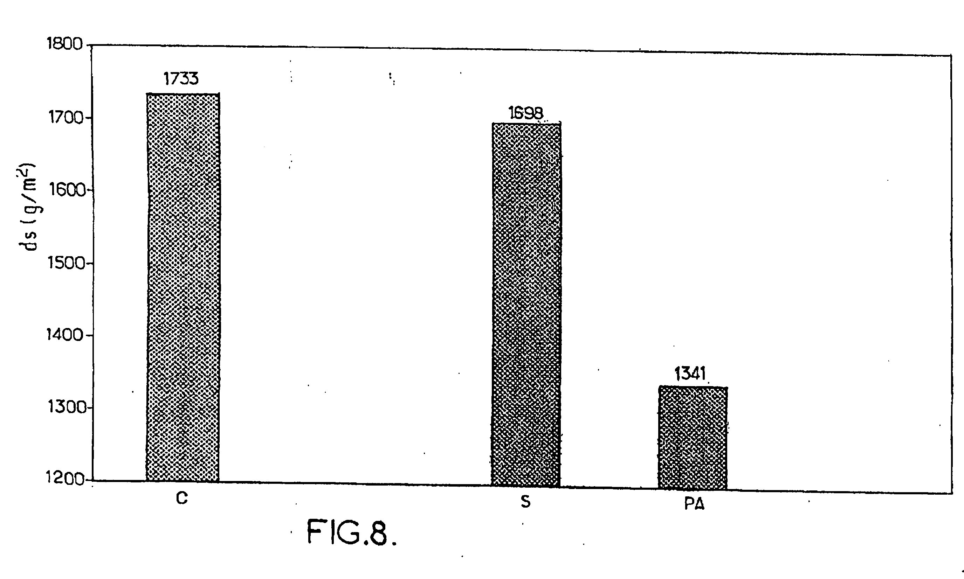

La figure 8 donne sous la forme d'un histogramme la densité surfacique ds de :

- l'éprouvette étalon en fibres de carbone des exemples 2.1 et 2.2. : bloc C-ds = 1733 g/m$^2$.
- l'éprouvette du stratifié composite selon l'invention avec un renfort fibreux en soie pour l'âme, telle que mise en oeuvre dans l'exemple 2.2 : bloc S-ds =1698 g/m$^2$,
- l'éprouvette en stratifié composite dont l'âme présente un renfort fibreux en CAMBRELLE PBS3 courbe b figure 4 exemple 2.1 : bloc PA-ds = 1341 g/m$^2$.

Cette figure 8 met en évidence les qualités de légèreté du composé stratifié selon l'invention.

**Revendications**

**1.** Stratifié composite (1) comprenant une structure sandwich faite d'une âme (2) intercalée entre deux peaux (3,4), **caractérisé en ce que** :

- l'âme(2) et les deux peaux (3,4) sont composites,
- au moins une partie des fibres de l'âme (2) sont des fibres dont la résistance mécanique est inférieure à celle d'au moins une partie des fibres de l'une et l'autre peau (3,4), et dont la résistance à la rupture en fraction longitudinale est inférieure à 1500 MPa

**2.** Stratifié selon la revendication 1, **caractérisé en ce qu'**il présente une épaisseur totale $\underline{e}$ inférieure ou égale à 3 mm.

**3.** Stratifié selon la revendication 2, **caractérisé en ce que** l'âme (2) a une épaisseur $e_2$ inférieure ou égale à 2 mm.

**4.** Stratifié selon l'une quelconque des revendications 1 à 3, **caractérisé en ce que** la matrice polymère, de préférence en résine, des composites formant les peaux et l'âme, est constituée par un seul et même produit.

**5.** Stratifié selon l'une quelconque des revendications 1 à 4, **caractérisé en ce que** le rapport de l'épaisseur $e_2$ de l'âme (2), sur l'épaisseur totale $e_3 + e_4$ des deux peaux (3,4) est défini comme suit :

$$e_2 / \frac{e3+e4}{2} \leq 5$$

de préférence

$$e_2 / \frac{e3+e4}{2} \leq 4$$

et plus préférentiellement encore

$$0,1 \leq e_2 / \frac{e3+e4}{2} \leq 3,5.$$

**6.** Stratifié selon rune quelconque des revendications 1 à 5, **caractérisé en ce que** les fibres de l'âme (2) sont tissées ou non, sont orientées ou non dans une ou plusieurs directions, et sont choisies dans le groupe comprenant :

• les (micro)fibres textiles en :

- polymères synthétiques : polyamides polyoléfine, polyesters, polyesterimides...
- polymères naturels : soie, coton, lin, jute, chanvre,

• les fibres cellulosiques.

**7.** Stratifié selon l'une quelconque des revendications 1 à 6, **caractérisé en ce que** les fibres de la peau ou des peaux (3,4) sont tissées ou non, orientées ou non dans une plusieurs directions et sont sélectionnées dans le groupe de (micro)fibres haute performance comprenant :

- les (micro)fibres de carbone,
- les (micro)fibres de verre,
- les (micro)fibres de polymères synthétiques, en particulier les polyoléfines, plus spécialement les fibres de polyéthylène haute densité orientées et étirées, les fibres de polyamides
- les (micro)fibres métalliques, en particulier, les (micro)fibres d'aluminium, de titane ou de bore,
- les (micro)fibres naturelles telles que la soie.

**8.** Stratifié selon l'une quelconque des revendications 1 à 7, **caractérisé en ce que** l'âme (2) et/ou la ou les peaux (3,4) sont obtenues par superposition de plusieurs plis de matériau fibreux et/ou composite.

**9.** Stratifié selon l'une quelconque des revendications 1 à 8, **caractérisé en ce qu'**au moins l'une des peaux (3,4) est transparente de manière à rendre visible l'âme(2), cette dernière comportant avantageusement des éléments de décoration.

**10.** Stratifié selon l'une quelconque des revendications 1 à 9, **caractérisé en ce qu'**il possède une caractéristique de résistance à la rupture R dans un test de flexion Tf par rapport à une éprouvette témoin en composite fibres de carbone de même forme et rigidité que celles des éprouvettes testées, telle que :

R ≥ 50,
de préférence R ≥60,
et plus préférentiellement encore R ≥ 70.

**11.** Procédé de fabrication du stratifié selon l'une quelconque des revendications 1 à 10 **caractérisé en ce que** l'on superpose un ou plusieurs plis constitutifs de l'âme et un ou plusieurs plis constitutifs des peaux, ces plis étant formés par des nappes de microfibres tissées ou non, orientées ou non, préimprégnées ou non de résine.

**12.** Utilisation de stratifié selon l'une quelconque des revendications 1 à 11 pour la fabrication des articles de sport et notamment :

- chaussures en particulier semelage ou tige, et plus spécialement de chaussures de sport
- articles de sport, notamment patins à roulettes, skis, surfs, skate-boards, manche ou "shaft" et tête de clubs de golf, trottinettes, cycles, cannes à pêche, raquettes, casques, bâtons de ski (fond), armatures de sac à dos, de tentes.

**13.** Articles de sport incorporant un stratifié selon l'une quelconque des revendications 1 à 10

**14.** Utilisation de stratifié selon l'une quelconque des revendications 1 à 11, pour la réalisation d'une peau de stratifié composite.

**Claims**

**1.** Composite laminate (1) having a sandwich structure made of a core (2) inserted between two layers (3, 4), **characterized in that**:

- the core (2) and the two layers (3, 4) are composite,
- at least a portion of the fibers of the core (2) are fibers, the mechanical strength of which is lower than that of at least a portion of the fibers of one and the other layer (3, 4), the longitudinal tensile strength of which is lower than 1500 MPa.

**2.** Laminate according to claim 1, **characterized in that** it has a total thickness $\underline{e}$ less than or equal to 3 mm.

**3.** Laminate according to claim 2, **characterized in that** the core (2) has a thickness $e_2$ less than or equal to 2 mm.

**4.** Laminate according to any of claims 1-3, **characterized in that** the polymer matrix, preferably made of resin, of the composites forming the layers and the core, is constituted by a single product.

**5.** Laminate according to any of claims 1-4, **characterized in that** the ratio of the thickness $e_2$ of the core (2) to the total thickness $e_3 + e_4$ of the two layers (3, 4) is defined as follows:

$$e_2 / \frac{e_3 + e_4}{2} \leq 5$$

preferably

$$e_2 / \frac{\overline{e_3 + e_4}}{2} \leq 4$$

and even more preferably

$$0.1 \leq e_2 / \frac{e_3 + e_4}{2} \leq 3.5.$$

6. Laminate according to any of claims 1-5, **characterized in that** the fibers of the core (2) are woven or unwoven, oriented in one or several directions or non-oriented, and are selected from the group including:

 • the textile (micro)fibers made of:

 - synthetic polymers: polyamides, polyolefine, polyesters, polyesterimides...
 - natural polymers: silk, cotton, linen, jute, hemp,

 • the cellulose fibers.

7. Laminate according to any of claims 1-6, **characterized in that** the fibers of the layer or layers (3, 4) are woven or unwoven, oriented in one or several directions or non-oriented, and are selected from the group of high performance (micro)fibers including:

 - carbon (micro)fibers;
 - glass (micro)fibers;
 - synthetic polymer (micro)fibers, in particular polyolefines, more specifically oriented and stretched high density polyethylene fibers, polyamide fibers;
 - metallic (micro)fibers, in particular aluminum, titanium, or boron (micro)fibers;
 - natural (micro)fibers such as silk.

8. Laminate according to any of claims 1-7, **characterized in that** the core (2) and/or the layer or layers (3, 4) are obtained by superimposing a plurality of folds of fibrous and/or composite material.

9. Laminate according to any of claims 1-8, **characterized in that** at least one of the layers (3, 4) is transparent so that the core (2) is visible, the latter advantageously comprising decorating elements

10. Laminate according to any of claims 1-9, **characterized in that** it has a characteristic of tensile strength R in a bending test Tf with respect to a specimen test piece made of a carbon fiber composite having the same shape and rigidity as those of the test pieces tested, such that:

 R$\geq$50,
 preferably R $\geq$ 60,
 and even more preferably R $\geq$ 70.

11. Method of manufacturing the laminate according to any of claims 1-10, **characterized in that** one or several folds forming the core and one or several folds forming the layers are superimposed, these folds being formed by plies of microfibers that are woven or unwoven, oriented or non-oriented, preimpregnated or non-preimpregnated with resin.

12. Use of laminate according to any of claims 1-11 for manufacturing sports articles, and especially:

 - shoes, in particular bottom assembly or upper, and more specifically sports shoes,
 - sports articles, in particular roller skates, skis, snowboards, skateboards, golf club shaft and head, scooters, cycles, fishing rods, racquets, helmets, cross country ski poles, backpack frames, tent pegs.

13. Sports articles comprising a laminate according to any of claims 1-10.

14. Use of laminate according to any of claims 1-11 for making a composite laminate layer.

**Patentansprüche**

1. Verbundschichtstoff (1), aufweisend eine sandwichartige Struktur, welche aus einem Kern (2) hergestellt ist, der zwischen zwei Außenschichten (3, 4) gesetzt ist, **dadurch gekennzeichnet, dass**

   - der Kern (2) und die beiden Außenschichten (3, 4) Verbundstoffe sind, und
   - mindestens ein Teil der Fasern des Kerns (2) Fasern sind, deren mechanische Widerstandsfähigkeit geringer ist als diejenige von mindestens einem Teil der Fasern der einen und der anderen Außenschicht (3, 4) und deren Bruchfestigkeit bei longitudinalem Ziehen niedriger als 1500 MPa ist.

2. Schichtstoff nach Anspruch 1, **dadurch gekennzeichnet, dass** er eine Gesamtdicke $\underline{e}$ kleiner oder gleich 3 mm aufweist.

3. Schichtstoff nach Anspruch 2, **dadurch gekennzeichnet, dass** der Kern (2) eine Dicke $e_2$ kleiner oder gleich 2 mm aufweist.

4. Schichtstoff nach irgendeinem der Ansprüche 1 bis 3, **dadurch gekennzeichnet, dass** die polymere Matrize, vorzugsweise aus Harz, der Verbundstoffe, welche die Außenschichten und den Kern bilden, durch ein und dasselbe Produkt gebildet wird.

5. Schichtstoff nach irgendeinem der Ansprüche 1 bis 4, **dadurch gekennzeichnet, dass** das Verhältnis der Dicke $e_2$ des Kerns (2) zur Gesamtdicke $e_3 + e_4$ der beiden Außenschichten (3, 4) wie folgt definiert ist:

$$e_2 / \frac{e_3 + e_4}{2} \leq 5$$

vorzugsweise

$$e_2 / \frac{e_3 + e_4}{2} \leq 4$$

und weiter vorzugsweise

$$0,1 \leq e_2 / \frac{e_3 + e_4}{2} \leq 3,5$$

6. Schichtstoff nach irgendeinem der Ansprüche 1 bis 5, **dadurch gekennzeichnet, dass** die Fasern des Kerns (2) gewoben sind oder nicht, ausgerichtet sind in einer oder mehreren Richtungen oder nicht und aus der Gruppe ausgewählt sind, welche aufweist:

   • die textilen (Mikro-) Fasern aus:

      - synthetischen Polymeren: Polyamide, Polyolefine, Polyester, Polyesterimide...
      - natürlichen Polymeren: Seide, Baumwolle, Leinen, Jute, Hanf

   • die Fasern aus Zellulose.

7. Schichtstoff nach irgendeinem der Ansprüche 1 bis 6, **dadurch gekennzeichnet, dass** die Fasern der Außenschicht oder der Außenschichten (3, 4) gewoben sind oder nicht, ausgerichtet sind in einer oder mehreren Richtungen oder nicht und ausgewählt sind aus der Gruppe von hoch leistungsfähigen (Mikro-) Fasern, welche aufweist:

   - die Karbon(mikro)fasern

- die Glas(mikro)fasern
- die (Mikro-) Fasern aus synthetischen Polymeren, insbesondere die Polyolefine, noch genauer die Fasern aus hochdichtem Polyethylen, welche ausgerichtet und gezogen sind, die Fasern aus Polyamiden;
- die metallischen (Mikro-) Fasern, insbesondere die (Mikro-) Fasern aus Aluminium, Titan oder Bor;
- die natürlichen (Mikro-) Fasern, wie z.B. Seide.

8. Schichtstoff nach einem der Ansprüche 1 bis 7, **dadurch gekennzeichnet, dass** der Kern (2) und/oder die Außenschicht oder die Außenschichten (3, 4) durch Übereinanderlegung von mehreren Lagen von fasrigem Material und/oder Verbundmaterial erhalten sind.

9. Schichtstoff nach irgendeinem der Ansprüche 1 bis 8, **dadurch gekennzeichnet, dass** mindestens die eine der Außenschichten (3, 4) derart transparent ist, um den Kern (2) sichtbar zu machen, wobei dieser letztere vorteilhafterweise Verzierungselemente aufweist.

10. Schichtstoff nach irgendeinem der Ansprüche 1 bis 9, **dadurch gekennzeichnet, dass** er eine Eigenschaft einer Bruchfestigkeit R in einem Biegetest Tf im Verhältnis zu einer Vergleichsprobe aus einem Kohlenfaserverbundstoff der gleichen Form und Steifigkeit wie diejenigen der getesteten Proben derart ist, dass: R $\geq$ 50,
vorzugsweise
R $\geq$ 60,
und weiter vorzugsweise
R $\geq$ 70.

11. Herstellungsverfahren des Schichtstoffs nach irgendeinem der Ansprüche 1 bis 10, **dadurch gekennzeichnet, dass** man eine oder mehrere Lagen, welche den Kern bilden, und eine oder mehrere Lagen, welche Außenschichten bilden, übereinanderlegt, wobei diese Lagen durch Flächengebilde aus gewobenen oder nicht-gewobenen Mikrofasern gebildet sind, welche ausgerichtet sind oder nicht, die mit Harz vorimprägniert sind oder nicht.

12. Verwendung eines Schichtstoffs nach irgendeinem der Ansprüche 1 bis 11 für die Herstellung von Sportartikeln und insbesondere:

- Schuhen, insbesondere die Besohlung oder den Schaft, und noch genauer Sportschuhen;
- Sportartikeln, insbesondere Rollbrettern, Skibrettern, Surfbrettern, Skateboardbrettern, Griffstangen oder "Schäften" und Köpfen von Golfschlägern, Rollern, Zweirädern, Angelrohren, Schlägern, Helmen, Skistöcken (Langlauf), Traggestellen von Rucksäcken und Zelten.

13. Sportartikel, welcher einen Schichtstoff nach irgendeinem der Ansprüche 1 bis 10 beinhaltet.

14. Verwendung eines Schichtstoffs nach irgendeinem der Ansprüche 1 bis 11 für die Realisierung einer Außenschicht eines Verbundschichtstoffs.

EP 1 199 155 B1

FIG.1.

FIG.2A.

FIG.2B..

FIG.3A.

FIG.3B.

FIG.4.

$e_2 / \dfrac{e_3 + e_4}{2}$

FIG.5.

R(%)

$e_2 / \dfrac{e_3 + e_4}{2}$

EP 1 199 155 B1

FIG.6.

$e_2/\dfrac{e_3+e_4}{2}$

R(%)

EP 1 199 155 B1

FIG.7.

EP 1 199 155 B1

FIG.8.

EP 1 199 155 B1